# EUROPEAN PATENT APPLICATION

(11) **EP 4 686 541 A1**
(43) Date of publication of application: **04.02.2026**
(21) Application number: 25177077.2
(22) Date of filing: 16.05.2025
(51) Int. Cl.: B28B 3/12, B28B 11/04, B28B 17/00, B28B 19/00, B30B 3/00, B30B 3/04, B30B 11/00, B30B 15/14, H01M 4/04

(54) **APPARATUS FOR ADJUSTING ROLLER GAP, AND APPARATUS AND METHOD FOR MANUFACTURING ELECTRODE PLATE OF SECONDARY BATTERY USING THE SAME**

(30) Priority: 01.08.2024 KR 20240102791
(71) Applicant: SAMSUNG SDI CO., LTD., Yongin-si, Gyeonggi-do 17084 (KR)
(72) Inventor: KIM, DoHyeong, 17084 Yongin-si (KR)
(74) Representative: Marks & Clerk LLP

(57) **Abstract**

An apparatus for adjusting a roller gap includes: an upper roller and a lower roller configured to perform roll-pressing on an electrode plate of a secondary battery; a roller gap sensor configured to measure a gap between the upper roller and the lower roller and to calculate gap data; and a roller position controller configured to adjust a position of one of the upper roller and lower roller according to the gap data.

## Description

### BACKGROUND

### 1. Field

Aspects of embodiments of the present disclosure relate to an apparatus for adjusting a roller gap and an apparatus for manufacturing an electrode plate of a secondary battery including the apparatus for adjusting a roller gap.

### 2. Description of the Related Art

Different from primary batteries, which are not designed to be charged, secondary batteries are batteries that are designed to be charged and discharged. Generally, a secondary battery includes an electrode assembly including (or formed of) positive/negative electrode plates and a separator. The positive/negative electrode plates may be manufactured through processes such as coating, roll-pressing, drying, slitting, and notching. An electrode assembly is manufactured by stacking and/or winding the positive/negative electrode plates manufactured in this manner with the separator interposed therebetween.

The coating process is a process of coating one or both sides of each of a positive and negative electrode substrate with an active material mixture (e.g., a slurry or powder). The roll-pressing (or calendering) process, in which a mixture-coated substrate is compressed and stretched to be thin and flat by using a roller, improves density, increases a binding strength between a surface and the active material, and enables smooth movement of lithium ions, thereby increasing the output and performance of the battery.

A main roller that can be used in the roll-pressing process of the electrode plate has an upper roller and a lower roller. Currently, position information of the lower roller is measured by using a sensor for measuring a position of the lower roller, and thus, the position of the lower roller is adjusted to control a roll-pressing thickness. However, because this method only measures a displacement value of the lower roller, a gap between the upper and lower rollers cannot be directly measured. Therefore, when a position change of the upper roller, roller bearing clearance, and/or dispersion of a position measuring sensor occur, a quality issue in which the roll-pressing thickness deviates from specifications occurs.

The above information disclosed in this Background section is for enhancement of understanding of the background of the present disclosure, and therefore, it may contain information that does not constitute related (or prior) art.

### SUMMARY

Embodiments of the present disclosure provide an apparatus for adjusting a roller gap that measures a gap between an upper roller and a lower roller in real time in a process in which the upper roller and the lower roller are used and moves (or changes) positions of the rollers by using the measured gap data, and an apparatus and a method for manufacturing an electrode plate of a secondary battery by using the apparatus for adjusting a roller gap.

According to an embodiment of the present disclosure, an apparatus for adjusting a roller gap includes an upper roller and a lower roller configured to perform roll-pressing on an electrode plate of a secondary battery, a roller gap sensor configured to measure a gap between the upper roller and the lower roller and to calculate gap data, and a roller position controller configured to adjust a position of one of the upper roller and lower roller according to the gap data.

According to another embodiment of the present disclosure, an apparatus for manufacturing an electrode plate of a secondary battery includes an upper roller and a lower roller configured to perform roll-pressing on an electrode plate of a secondary battery and an apparatus for adjusting a roller gap configured to measure a gap between the upper roller and the lower roller, calculate gap data, and adjust a position of one of the upper roller and the lower roller according to the calculated gap data.

According to another embodiment of the present disclosure, a method of manufacturing an electrode plate of a secondary battery includes performing roll-pressing on an electrode plate of a secondary battery by using an upper roller and a lower roller and performing roller gap adjustment by measuring a gap between the upper roller and the lower roller, calculating gap data, and adjusting a position of one of the upper roller and the lower roller according to the calculated gap data.

Aspects and features of the present disclosure are not limited those listed above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic diagram of an electrode assembly that can be manufactured by using an electrode plate manufactured by a method and apparatus for manufacturing an electrode plate of a secondary battery according to an embodiment of the present disclosure;
FIG. 2 is a schematic diagram of a pouch-type secondary battery including the electrode assembly shown in FIG. 1;
FIG. 3 is a cross-sectional view of a cylindrical secondary battery including an electrode assembly that can be manufactured by using the electrode plate manufactured by the method and apparatus for manufacturing an electrode plate of a secondary battery according to an embodiment of the present disclosure;
FIG. 4 is a cross-sectional view of a prismatic secondary battery including an electrode assembly that can be manufactured by using the electrode plate manufactured by the method and apparatus for manufacturing an electrode plate of a secondary battery according to an embodiment of the present disclosure;
FIG. 5 is a schematic diagram of a process for manufacturing an electrode plate;
FIG. 6 is a schematic diagram of an apparatus for measuring a roller gap according to some embodiments of the present disclosure;
FIGS. 7A and 7B are side views illustrating the apparatus for measuring a roller gap shown in FIG. 6;
FIG. 8 is a flowchart describing steps of a method of measuring a roller gap in real time by using the apparatus for measuring a roller gap during electrode plate roll-pressing and adjusting a position of the roller according to the measured value according to some embodiments of the present disclosure;
FIG. 9 is a flowchart describing steps of a method of measuring a roller gap and adjusting a roller position in real time according to some embodiments of the present disclosure;
FIG. 10 is a schematic diagram of an apparatus for measuring roundness according to some embodiments of the present disclosure;
FIG. 11 is a diagram illustrating roundness data;
FIG. 12 is a schematic diagram illustrating a processing part configured to execute a task of operation of correcting gap data; and
FIGS. 13A-13C are diagrams respectively illustrating gap data, roundness data, and final gap data in which the gap data and the roundness data are combined.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

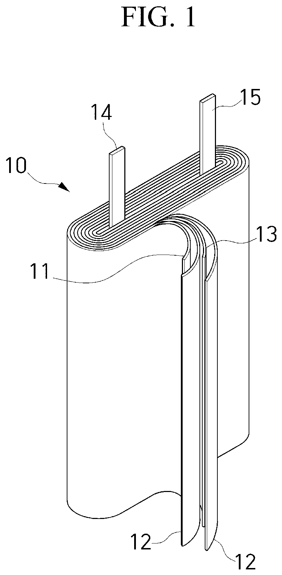

FIG. 1 is a schematic diagram of an electrode assembly including an electrode plate manufactured by a method and apparatus for manufacturing an electrode plate of a secondary battery according to an embodiment of the present disclosure.

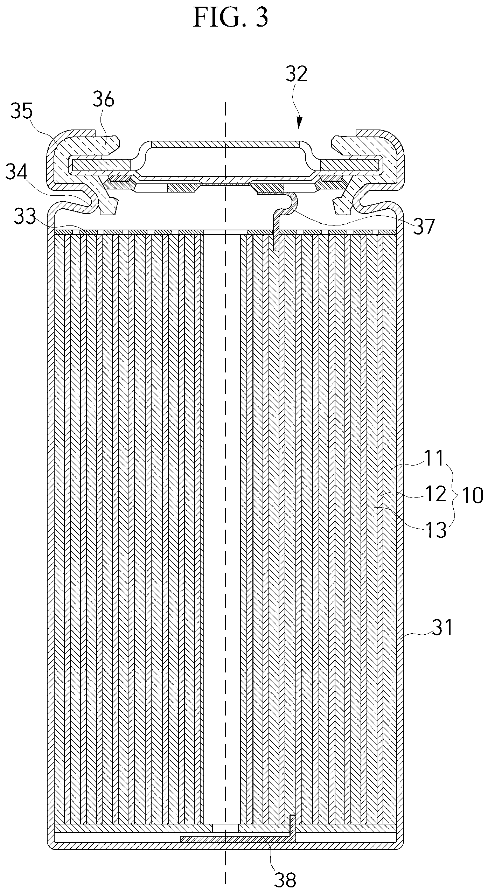

An electrode assembly 10 may be formed by stacking or winding a stack of a first electrode plate 11, a separator 12, and a second electrode plate 13, which are each formed as thin plates or films. When the electrode assembly 10 is a wound stack, a winding axis may be parallel to a longitudinal direction of the case (see, e.g., FIG. 3). In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated together in the case, and the number of electrode assemblies in the case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 (e.g., a first uncoated portion) that is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10 or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode current collector formed of a metal foil, such as aluminum or an aluminum alloy. The second electrode plate 13 may include a second electrode tab 15 (e.g., a second uncoated portion) that is a region to which the second electrode active material is not applied. The second electrode tab 15 may be connected to an external second terminal. In some embodiments, the second electrode tab 15 may be formed by being cut in advance to protrude to (or protrude from) the other side (e.g., the opposite side) of the electrode assembly 10 when the second electrode plate 13 is manufactured or the second electrode plate 13 may protrude to the other side of the electrode assembly more than (e.g., farther than or beyond) the separator 12 without being separately cut.

In some embodiments, the first electrode tab 14 may be located on the left side of the electrode assembly 10, and the second electrode tab 15 may be located on the right side of the electrode assembly 10. In other embodiments, the first electrode tab 14 and the second electrode tab 15 may be located on one side (e.g., the same side) of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

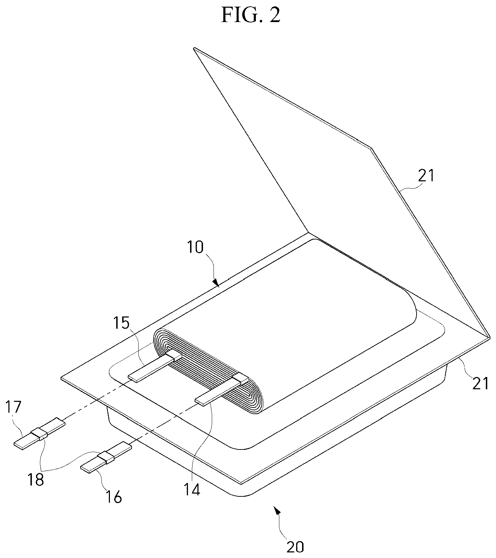

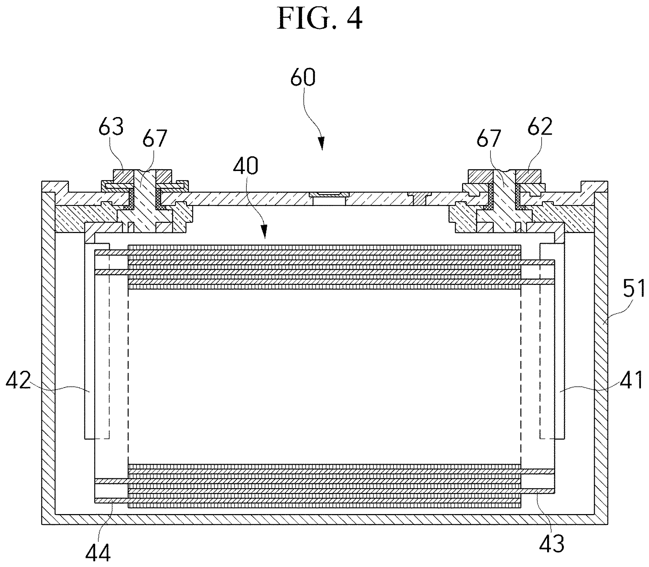

In some embodiments, the electrode assembly 10 may be accommodated in the case along with an electrolyte. In the case of a pouch-type secondary battery, an electrode assembly 10 may be accommodated in a pouch made of flexible material in the form illustrated in, for example, FIG. 2. In the case of a cylindrical or prismatic secondary battery, an electrode assembly 10 may be accommodated in a cylindrical or prismatic metal casing in the form illustrated in, for example, FIGS. 3 and 4.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fₑ₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a schematic diagram of a pouch-type secondary battery including the electrode assembly shown in FIG. 1.

The pouch-type secondary battery includes the electrode assembly 10 and a pouch 20 that accommodates the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other while accommodating the electrode assembly 10 therein, and the sealing may be achieved with the tab film 18 interposed between the sealing parts 21. The sealing parts 21 of the pouch 20 may each be made of a thermal fusion material that generally exhibits weak adhesion to metal. Thus, the pouch 20 may be fused by interposing the thin tab film 18 between the sealing parts 21.

FIG. 3 is a cross-sectional view of a cylindrical secondary battery including an electrode assembly that is manufactured by using the electrode plate manufactured by the method and apparatus for manufacturing an electrode plate of a secondary battery according to an embodiment of the present disclosure.

The cylindrical secondary battery may include an electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms the external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of the gasket and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed to the inside of the crimping part 35 by a gasket 36 to seal the case 31. A first lead tab 37 drawn out from the electrode assembly 10 may be connected to the cap assembly 32, and a second lead tab 38 drawn out from the electrode assembly 10 may be electrically connected to the bottom of the case 31.

FIG. 4 is a cross-section view of a prismatic secondary battery including an electrode assembly that is manufactured by using the electrode plate manufactured by the method and apparatus for manufacturing an electrode plate of a secondary battery according to an embodiment of the present disclosure.

As shown in FIG. 4, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are each formed as thin plates or films. When the electrode assembly 40 is a wound stack, a winding axis may be parallel to the longitudinal direction of the case 51. In other embodiments, the electrode assembly 40 may be a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors are located at the top of the electrode assembly 40.

As illustrated in FIG. 4, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

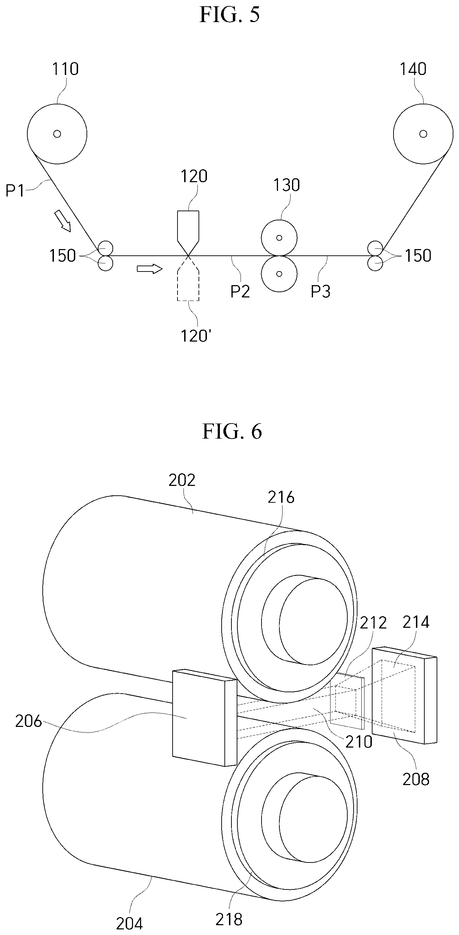

FIG. 5 is a schematic diagram illustrating a process for manufacturing an electrode plate (e.g., the first electrode plate 11 or the second electrode plate 13).

A supply roll 110 is a roll on which a substrate P1 for an electrode plate is wound. When an apparatus for manufacturing electrode plates according to an embodiment of the present disclosure is used to manufacture a positive electrode plate, the substrate P1 may be a metal foil including (or containing) aluminum (Al), for example, and when the apparatus for manufacturing electrode plates according to an embodiment of the present disclosure is used to manufacture a negative electrode plate, the substrate P1 may be a metal foil including (or containing) copper (Cu) or nickel (Ni).

A transfer roller 150 may be an idle roller that guides the substrate P1 that is unwound from the supply roll 110 or a drive roller that applies a pulling force to allow the substrate P1 to be unwounded from the supply roll 110. FIG. 5 illustrates an embodiment including a total of four transfer rollers 150 as an example, and the number and positions of transfer rollers may be varied.

A coating unit 120 forms a coating layer by coating the substrate P1 with an electrode material slurry (e.g., a previously prepared slurry).

Here, a mixture to be coated may include an active material, and for example, when the mixture is used to manufacture a positive electrode plate, the mixture may include an active material that includes (or contains) a lithium transition metal oxide, a binder, and a volatile solvent. When a negative electrode plate is manufactured, the mixture may be prepared with an active material, a binder, and a solvent. In addition, both surfaces of the substrate P1, that is, an upper surface and a lower surface, may be concurrently (or simultaneously) coated by adding a second coating unit 120' having the same configuration as the coating unit 120 shown in FIG. 5 to the lower surface of the substrate P1.

As shown in FIG. 5, a coated substrate P2 may have a coated portion coated with an active material mixture and an uncoated portion that remains as a substrate without being coated. For reference, a width direction of the electrode plate is referred to as a transverse direction (TD), and a longitudinal direction, which is a direction in which the electrode plate moves, is referred to as a machine direction (MD). Different from a single row coating, a multi-row coating method including concurrently (or simultaneously) coating multiple rows of coating areas in the TD of the substrate. After the multi-row coated substrate undergoes a roll-pressing process, the multi-row coated substrate may be cut in the MD in a slitting process to be separated into electrode plates in rows.

The roll-pressing unit 130 may compress the substrate P2 coated with the mixture by the coating unit 120 by using a roller to manufacture a high-capacity, high-density secondary battery. The roll-pressing process may be a process of increasing a battery capacity by reducing a thickness of the electrode plate to increase electrode density, improving a contact force between the substrate and the active material, and generating directionality in a crystal structure of the active material to facilitate the entry and exiting of lithium ions. An electrode plate P3 on which the coating and roll-pressing have been performed may be wound by a winding roll 140 and accommodated thereon.

A conventional roll-pressing unit is approximately formed of an upper roller acting as a base during roll-pressing and a lower roller whose position is controlled by a hydraulic system that measures a gap between the rollers by a sensor for measuring a position of the hydraulic cylinder moving the lower roller and controls the gap, thereby controlling a roll-pressing thickness. However, such a configuration can only measure a displacement value of the lower roller, the gap between the upper and lower rollers is not, and cannot be, directly measured.

FIG. 6 is a schematic diagram of an apparatus for measuring a roller gap according to some embodiments of the present disclosure.

A light emitting source 206 and a light receiving sensor 208 may be installed to allow (or to emit) light to pass through a gap between an upper roller 202 and a lower roller 204. Here, the light emitting source may be a laser light source and the light receiving sensor may be a sensor for detecting the laser light. As described above, a laser sensing system for gap measurement has better straightness than other sensors and can therefore accurately measure a width of a beam passing through the gap between the rollers. However, a sensor system not using laser light may be employed as long as it is suitable for achieving the purpose of roller gap measurement.

A light beam emitted from the light emitting source 206 may be diverged or converged by a lens 212 to reach the light receiving sensor 208. In FIG. 6, an embodiment in which the light beam is radiated from the light emitting source 206 in a quadrangular pillar shape 214, and the light receiving sensor 208 is a quadrangular surface-sensitive sensor for receiving the quadrangular pillar-shaped light beam 214 is illustrated, but the present disclosure is not limited thereto. The shape of the light beam is not limited to that shown in FIG. 6 as long as the gap between the upper roller 202 and the lower roller 204 can be measured.

In FIG. 6, small diameter parts 216 and 218 having diameters smaller than diameters of the rollers on flat surfaces of the upper roller 202 and the lower roller 204 are for measuring roundness and will be described below.

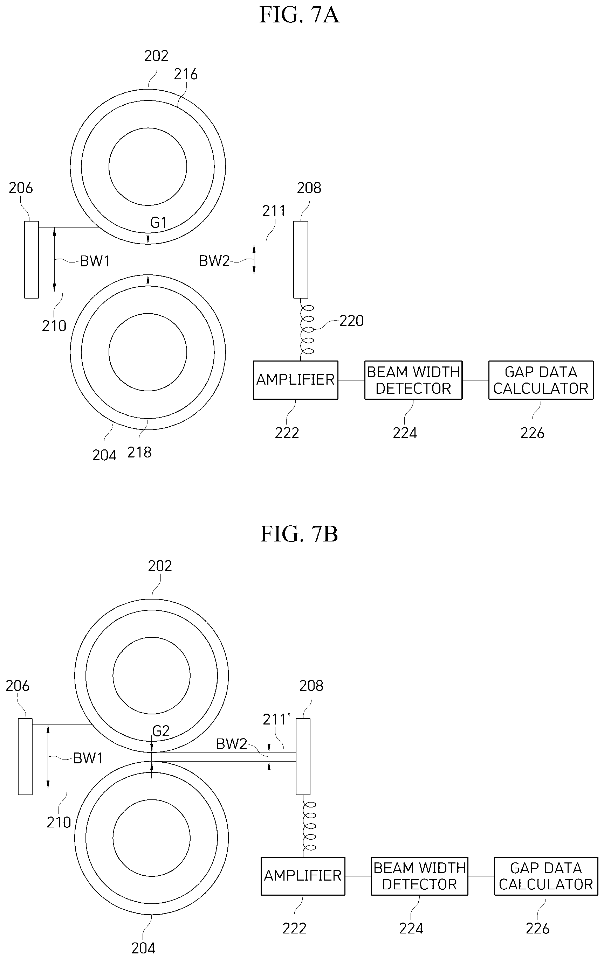

FIGS. 7A and 7B are side views illustrating the apparatus for measuring a roller gap shown in FIG. 6. FIG. 7A shows a case in which a gap G1 between the upper roller 202 and the lower roller 204 is relatively large, and FIG. 7B shows a case in which the gap G2 between the upper roller 202 and the lower roller 204 is relatively small.

Referring to FIG. 7A, a beam width BW1 of an incident light beam 210 entering the gap G1 between the upper roller 202 and the lower roller 204 may be partially obscured by the gap G1, and the beam width BW2 of an exit light beam 211 exiting G1 may be reduced and may reach (e.g., may be incident on) the light receiving sensor 208.

From among a plurality of photosensitive cells disposed on a sensitive surface of the light receiving sensor 208, photosensitive cells activated by an area or a line length of the exit light beam 211 may output electrical signals (e.g., predetermined electrical signals). The electrical signals may be transmitted to an amplifier 222 through a connection line 220. The electrical signals may be amplified by the amplifier 222, beam width information of a corresponding electrical signal may be detected by a beam width detector 224, and a gap data calculator 226 may calculate a value of the current gap G1 from the beam width information.

Next, referring to FIG. 7B, the beam width BW1 of an incident light beam 210 entering the gap G2 (G2<G1) between the upper roller 202 and the lower roller 204 may be more obscured by the gap G2 than the gap G1, and a beam width BW2 of an exit light beam 211' exiting the gap G2 may be more reduced and may reach the light receiving sensor 208.

From among a plurality of photosensitive cells disposed on a sensitive surface of the light receiving sensor 208, photosensitive cells activated by an area or a line length of the exit light beam 211' may output electrical signals. The electrical signals may be transmitted to the amplifier 222. The electrical signals may be amplified by the amplifier 222, beam width information of a corresponding electrical signal may be detected by a beam width detector 224, and a gap data calculator 226 may calculate a value of the current gap G2 from the beam width information.

The gap measurement operation of the apparatus for measuring a roller gap may be performed in real time. That is, while the upper roller 202 and the lower roller 204 perform roll-pressing of the electrode plate, the gap measurement may be performed at any position of each roller (e.g., a region at where the rollers do not come into contact with the electrode plates).

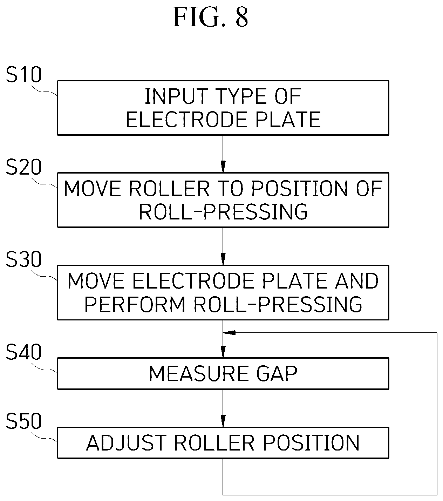

FIG. 8 is a flowchart describing steps of a method of measuring a roller gap in real time by using the above-described apparatus for measuring a roller gap during electrode plate roll-pressing and adjusting (e.g. in real time) a position of the roller according to the measured value according to some embodiments of the present disclosure.

To start a roll-pressing process, an operator may input a type of electrode plate into roll-pressing equipment (S10). Because various types of electrode plates may be manufactured depending on a type of secondary battery, charge/discharge capability, and buyer specifications, various roll-pressing conditions may be preset by inputting a type of the electrode plate into the roll-pressing equipment. The roll-pressing conditions may include the gap between the upper and lower rollers.

When the type of electrode plate is input, the rollers may move to preset positions and prepare to perform the roll-pressing under a condition corresponding to the input type (S20). The position movement of the rollers may be such that a position of the lower roller 204 is adjusted up and down. Conventionally, the roller system of a press roll-pressing facility may include the upper roller 202 acting as a base and the lower roller 204 having a position controlled by a hydraulic system below the upper roller 202. Thus, the lower roller 204 may move to a position corresponding to the input electrode plate type and prepare for roll-pressing.

The electrode plate may move and enter the gap between the upper roller 202 and the lower roller 204, and the roll-pressing may be performed (S30). While the roll-pressing is in progress, the gap between the upper roller 202 and the lower roller 204 may be measured in real time by using the apparatus for measuring a roller gap to calculate gap data (S40).

According to the calculated gap data, a roller position controller (e.g., a hydraulic system for moving the position of the lower roller 204) may adjust the position of the roller (S50). In this way, during the roll-pressing of the electrode plate, gap measurement and roller position adjustment may be performed in real time.

The gap measurement (S40) and the roller position adjustment (S50) may be performed in real time during the roll-pressing process through real-time update of the gap data, and the roller position may be adjusted at any time when a condition does not meet the condition that is set for the type of a corresponding electrode plate. Therefore, the gap between the upper roller 202 and the lower roller 204 may always be maintained within the specified condition.

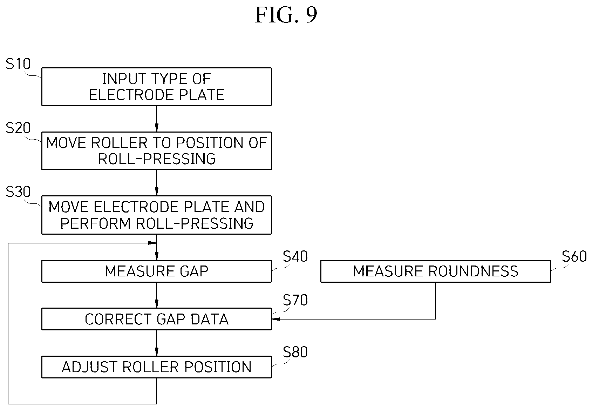

FIG. 9 is a flowchart describing steps of a method of measuring a roller gap and adjusting a roller position in real time according to some embodiments of the present disclosure.

Similar to the embodiment described with reference to FIG. 8, when the type of electrode plate is input into the roll-pressing equipment (S10), the roller may move to prepare to perform roll-pressing (S20), and then the electrode plate may move and enter between the upper roller 202 and the lower roller 204, and the roll-pressing may be performed (S30). While the roll-pressing is in progress, the gap between the upper roller 202 and the lower roller 204 may be measured in real time by using the apparatus for measuring a roller gap to calculate gap data (S40).

In addition to the gap measurement (S40), roundness of the upper roller 202 and the lower roller 204 may be measured (S60). The measured roundness data may be used to correct the calculated gap data (S70). The roller position controller may adjust the roller position according to the gap data corrected by using the roundness data (S80).

According to this embodiment, the gap between the upper roller 202 and the lower roller 204 and the roundness may be measured in real time during the roll-pressing of the electrode plate so that the roller position may be more precisely adjusted. A method of measuring roundness of a roller will be described below.

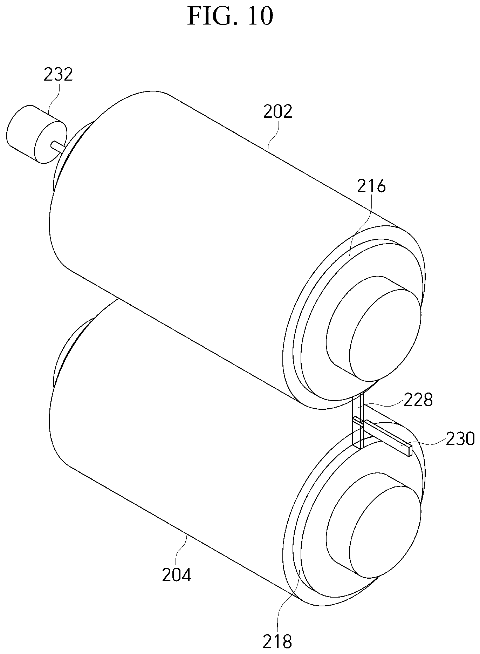

FIG. 10 is a schematic diagram of an apparatus for measuring roundness according to some embodiments of the present disclosure.

A capacitance sensor may be used to measure the roundness of the upper roller 202 and the roundness of the lower roller 204. A capacitance sensor or a capacitance displacement sensor may be a sensor for detecting a change in capacitance generated between a target and the electrode plate by bringing the electrode plate close to the target and applying a high-frequency signal.

FIG. 10 shows an embodiment in which, in order to concurrently (or simultaneously) measure the roundness of the upper roller 202 and the lower roller 204, a bidirectional capacitance probe 228 is installed between a small diameter part 216 of the upper roller 202 and a small diameter part 218 of the lower roller 204, and a signal processor 230 for processing the change in capacitance from the probe 228 and outputting the processed change as an electrical signal is used. However, in some other embodiments, one dedicated capacitance sensor may be installed on the upper roller 202, and another dedicated capacitance sensor may be installed on the lower roller 204 to measure the roundness of each.

By installing the bidirectional capacitance probe 228 between the small diameter part 216 of the upper roller 202 and the small diameter part 218 of the lower roller 204, probe installation space may be secured because the probe 228 cannot be installed due to the gap between the upper roller 202 and the lower roller 204 being small.

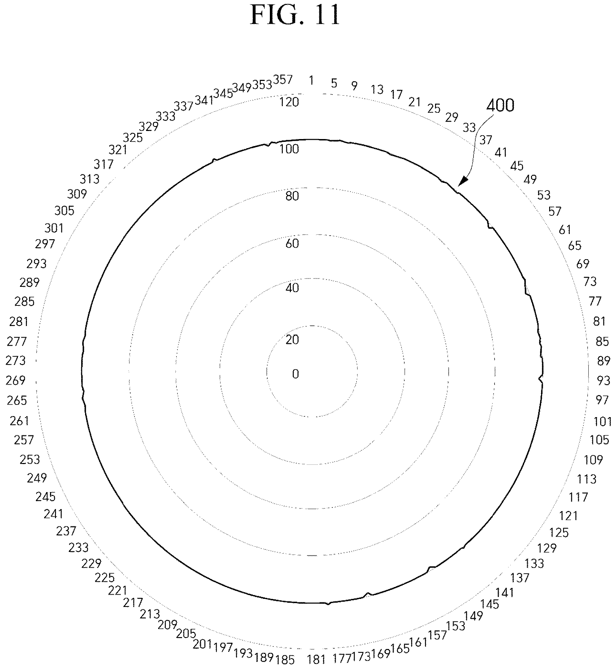

In the embodiment shown in FIG. 10, an encoder 232 may be installed on a rotating shaft of the upper roller 202 and/or the lower roller 204, but the present disclosure is not limited thereto. A roundness measurement circuit may be formed to acquire N (e.g., 3600) pulses per rotation of the roller, which are generated from the encoder 232 rotating together while the roller rotates and, thus, N (e.g., 3600) points of base data per rotation of the roller may be obtained. Here, N may be a natural number, but the present disclosure is not limited thereto. The base data may be converted radially to generate roundness data as shown in FIG. 11. FIG. 11 shows an example in which radial roundness data 400 is generated by collecting 3600 points of base data over 360° of surface measurement values of a circumference of the small diameter parts 216 and 218 in FIG. 10 of 100 mm that is smaller than an outer diameter of 120 mm of the upper roller 202 or the lower roller 204.

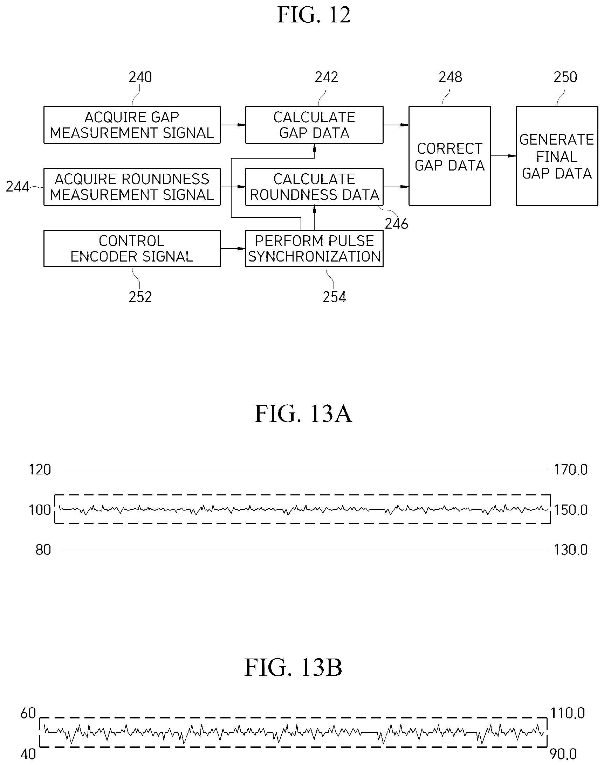

FIG. 12 is a diagram illustrating a task processing part in operation (S70) of correcting gap data by using the roundness data, as described in FIG. 9, according to an embodiment of the present disclosure. The task processing part shown in FIG. 12 may be implemented utilizing any suitable hardware, firmware (e.g., an application-specific integrated circuit), software, and/or a suitable combination of software, firmware, and hardware. For example, the various components of the task processing part may be formed on one integrated circuit (IC) chip or on separate IC chips. Further, the various components of the task processing part may be implemented on a flexible printed circuit film, a tape carrier package (TCP), a printed circuit board (PCB), or formed on a same substrate as the task processing part. Further, the various components of the task processing part may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the present disclosure.

As described above, gap measurement signals of the upper roller 202 and the lower roller 204 may be acquired by using the apparatus for measuring a roller gap (240), and gap data may be calculated from the gap measurement signals (242).

As described above, roundness measurement signals of the upper roller 202 and the lower roller 204 may be acquired by using the roundness measurement device (244), and roundness data may be calculated from the roundness measurement signals (246).

The calculated roundness data may be combined with the calculated gap data and the gap data (248) may be corrected to generate final gap data (250). Generating the final gap data by combining the roundness data with the gap data may be performed by known computer programs.

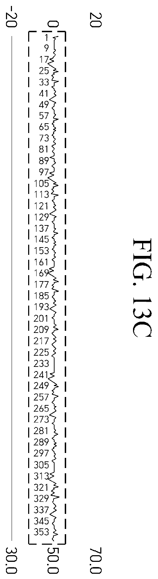

FIGS. 13A-13C are example diagrams respectively illustrating gap data, roundness data, and final gap data in which the gap data and the roundness data are combined. Generating the final gap data (see, e.g., FIG. 13C) by combining the roundness data with the gap data may be performed by using a certain deviation offset program.

By using the final gap data obtained by combining the roundness data acquired by using, for example, a capacitance sensor with the gap data acquired using, for example, a laser sensor system, the distribution or tolerance of the roll-pressing roller may be absorbed to address problems such as a change in base position of the roller and a height difference of bearings of the roller.

Because N (e.g., 3600) points of roundness data are acquired by control of the pulse signal generated by the encoder 232, the laser sensor (e.g., the laser light source 206 and the light receiving sensor 208) should be configured to acquire N (e.g., 3600) points of data per rotation of the roller. In addition, for the real-time roller gap and roundness monitoring, data acquisition timing of the capacitance sensor and a data acquisition timing of the laser sensor may be synchronized. To this end, a pulse synchronization part 254 for controlling a pulse signal 252 output from the encoder to synchronize the gap data acquisition timing and the roundness data acquisition timing may be added to the configuration shown in FIG. 12.

In some other embodiments of the present disclosure, the apparatus for measuring a roller gap may be linked with a thickness measuring device at a rear end of the roll-pressing equipment and utilized for feedback control of the electrode plate thickness. In such an embodiment, the gap between the upper roller 202 and the lower roller 204 may be standardized and stored for each type of electrode plate, and when a specific type of electrode plate is put there, an automated system in which the upper roller 202 and/or the lower roller 204 may automatically move to the roll-pressing position may be built.

According to an embodiment of the present disclosure, by using gap data acquired in real time, a distribution or tolerance of rollers used in roll-pressing or other presses can be measured, thereby addressing a change in base position of the roller and a height difference of bearings of the roller. By using final gap data in which roundness data is reflected in gap data, more precise roller gap adjustment and management are possible.

Aspects and features of the present disclosure can be applied to all press equipment, such as roll and reel presses.

Embodiments are set out in the following clauses:
Clause 1. An apparatus for adjusting a roller gap, comprising: an upper roller and a lower roller configured to perform roll-pressing on an electrode plate of a secondary battery; a roller gap sensor configured to measure a gap between the upper roller and the lower roller and to calculate gap data; and a roller position controller configured to adjust a position of one of the upper roller and lower roller according to the gap data.
Clause 2. The apparatus according to clause 1, wherein the roller gap sensor is configured to measure the gap between the upper roller and the lower roller in real time while the upper roller and the lower roller perform the roll-pressing and to calculate the gap data.
Clause 3. The apparatus according to clause 1 or 2, wherein the roller gap sensor comprises a light emitting source configured to emit light into the gap between the upper roller and the lower roller, and a light receiving sensor configured to receive the light passing through the gap.
Clause 4. The apparatus according to clause 3, wherein the light emitting source comprises a laser light source.
Clause 5. The apparatus as according to any preceding clause, further comprising: a roundness sensor configured to measure roundness of the upper roller and lower roller and to calculate roundness data; and a gap data correction part configured to reflect the roundness data in the gap data calculated in the roller gap sensor and to correct the gap data, wherein the roller position controller is configured to adjust a roller position according to final gap data reflecting the roundness data.
Clause 6. The apparatus according to clause 5, wherein the roundness sensor comprises capacitance sensors installed on surfaces of the upper roller and the lower roller.
Clause 7. The apparatus as claimed in clause 6, wherein the roundness sensor further comprises an encoder installed on a rotating shaft of at least one of the upper roller and lower roller, and wherein the encoder is configured to acquire N points of data during one rotation of the at least one of the upper roller and the lower roller.
Clause 8. The apparatus according to clause 7, wherein the gap data correction part further comprises a pulse synchronization part configured to control a pulse signal output from the encoder to synchronize an acquisition timing of the gap data with an acquisition timing of the roundness data.
Clause 9. An apparatus for manufacturing an electrode plate of a secondary battery, the apparatus comprising: an upper roller and a lower roller configured to perform roll-pressing on an electrode plate of a secondary battery; and an apparatus for adjusting a roller gap configured to measure a gap between the upper roller and the lower roller, calculate gap data, and adjust a position of one of the upper roller and the lower roller according to the calculated gap data.
Clause 10. The apparatus according to clause 9, wherein the apparatus for adjusting the roller gap comprises a light emitting source configured to emit light into the gap between the upper roller and the lower roller, and a light receiving sensor configured to receive the light passing through the gap.
Clause 11. The apparatus according to clause 9 or 10, wherein the apparatus for adjusting the roller gap comprises: a roundness sensor configured to measure roundness of the upper roller and lower roller and to calculate roundness data; and a gap data correction part configured to reflect the roundness data in the gap data calculated the apparatus for adjusting the roller gap and to correct the gap data, wherein the apparatus for adjusting the roller gap is configured to adjust a roller position according to final gap data reflecting the roundness data.
Clause 12. The apparatus according to clause 11, wherein the roundness sensor of the apparatus for adjusting a roller gap further comprises an encoder installed on a rotating shaft of at least one of the upper roller and lower roller, and wherein the encoder is configured to acquire N points of data during one rotation of the at least one of the upper roller and the lower roller.
Clause 13. The apparatus according to clause 12, wherein the gap data correction part of the apparatus for adjusting the roller gap further comprises a pulse synchronization part configured to control a pulse signal output from the encoder to synchronize an acquisition timing of the gap data with an acquisition timing of the roundness data.
Clause 14. The apparatus according to clause 11, 12 or 13, further comprising a thickness sensor configured to measure a thickness of the electrode plate roll-pressed by the upper roller and lower roller and to control an electrode plate thickness.
Clause 15. A method of manufacturing an electrode plate of a secondary battery, the method comprising: performing roll-pressing on an electrode plate of a secondary battery by using an upper roller and a lower roller; and performing roller gap adjustment by measuring a gap between the upper roller and the lower roller, calculating gap data, and adjusting a position of one of the upper roller and the lower roller according to the calculated gap data.
Clause 16. The method according to clause 15, wherein the performing of the roller gap adjustment comprises emitting light into the gap between the upper roller and the lower roller, and receiving the light passing through the gap.
Clause 17. The method according to clause 15 or 16, wherein the performing of the roller gap adjustment comprises: measuring roundness of the upper roller and lower roller to acquire roundness data; and reflecting the roundness data in the gap data and correcting the gap data, wherein a roller position is adjusted according to final gap data reflecting the roundness data.
Clause 18. The method according to clause 17, wherein the measuring of the roundness comprises acquiring N points of data during one rotation of at least one of the upper roller and the lower roller by using an encoder installed on a rotating shaft of the at least one of the upper roller and lower roller.
Clause 19. The method according to clause 18, wherein the correcting of the gap data comprises performing pulse synchronization by controlling a pulse signal output from the encoder to synchronize an acquisition timing of the gap data with an acquisition timing of the roundness data.
Clause 20. The method according to any one of clauses 15 to 19, further comprising measuring a thickness of the electrode plate roll-pressed by the upper roller and lower roller and controlling an electrode plate thickness.

Although the present disclosure has been described above with respect to embodiments thereof, the present disclosure is not limited thereto. Various modifications and variations can be made thereto by those skilled in the art within the scope of the appended claims. For example, an upper roller and a lower roller may be rollers used in a roll-pressing process when an electrode plate of a secondary battery is manufactured, but the present disclosure is not limited thereto. The present disclosure can be applied to rollers and reels used in presses and conveyances of various fields.

## Claims

1. An apparatus for adjusting a roller gap, comprising:
an upper roller and a lower roller configured to perform roll-pressing on an electrode plate of a secondary battery;
a roller gap sensor configured to measure a gap between the upper roller and the lower roller and to calculate gap data; and
a roller position controller configured to adjust a position of one of the upper roller and lower roller according to the gap data.

2. The apparatus as claimed in claim 1, wherein the roller gap sensor is configured to measure the gap between the upper roller and the lower roller in real time while the upper roller and the lower roller perform the roll-pressing, and to calculate the gap data.

3. The apparatus as claimed in claim 1 or 2, wherein the roller gap sensor comprises a light emitting source configured to emit light into the gap between the upper roller and the lower roller, and a light receiving sensor configured to receive the light passing through the gap.

4. The apparatus as claimed in any preceding claim, further comprising:
a roundness sensor configured to measure roundness of the upper roller and lower roller and to calculate roundness data; and
a gap data correction part configured to correct the gap data calculated in the roller gap sensor by using the roundness data calculated by the roundness sensor,
wherein the roller position controller is configured to adjust a roller position according to the corrected gap data.

5. The apparatus as claimed in claim 4, wherein the roundness sensor comprises:
capacitance sensors installed on surfaces of the upper roller and the lower roller; and
an encoder installed on a rotating shaft of at least one of the upper roller and lower roller,
wherein the encoder is configured to acquire N points of data during one rotation of the at least one of the upper roller and the lower roller.

6. The apparatus as claimed in claim 4 or 5, wherein the gap data correction part further comprises a pulse synchronization part configured to control a pulse signal output from the encoder to synchronize an acquisition timing of the gap data with an acquisition timing of the roundness data.

7. An apparatus for manufacturing an electrode plate of a secondary battery, the apparatus comprising:
the apparatus for adjusting a roller gap of claim 1.

8. The apparatus as claimed in claim 7, wherein the apparatus for adjusting the roller gap comprises:
a roundness sensor configured to measure roundness of the upper roller and lower roller and to calculate roundness data; and
a gap data correction part configured to correct the gap data calculated by the apparatus for adjusting the roller gap by using the roundness data calculated by the roundness sensor,
wherein the apparatus for adjusting the roller gap is configured to adjust a roller position according to the corrected gap data.

9. The apparatus as claimed in claim 8, wherein the roundness sensor of the apparatus for adjusting a roller gap further comprises an encoder installed on a rotating shaft of at least one of the upper roller and lower roller, and
wherein the encoder is configured to acquire N points of data during one rotation of the at least one of the upper roller and the lower roller.

10. The apparatus as claimed in any one of claims 7 to 9, further comprising a thickness sensor configured to measure a thickness of the electrode plate roll-pressed by the upper roller and lower roller and to control an electrode plate thickness.

11. A method of manufacturing an electrode plate of a secondary battery, the method comprising:
performing roll-pressing on an electrode plate of a secondary battery by using an upper roller and a lower roller; and
performing roller gap adjustment by measuring a gap between the upper roller and the lower roller, calculating gap data, and adjusting a position of one of the upper roller and the lower roller according to the calculated gap data.

12. The method as claimed in claim 11, wherein the performing of the roller gap adjustment comprises emitting light into the gap between the upper roller and the lower roller and receiving the light passing through the gap.

13. The method as claimed in claim 11 or 12, wherein the performing of the roller gap adjustment comprises:
measuring roundness of the upper roller and lower roller to acquire roundness data; and
correcting the gap data by using the acquired roundness data,
wherein a roller position is adjusted according to the corrected gap data.

14. The method as claimed in claim 13, wherein the measuring of the roundness comprises acquiring N points of data during one rotation of at least one of the upper roller and the lower roller by using an encoder installed on a rotating shaft of the at least one of the upper roller and lower roller.

15. The method as claimed in any of claims 11 to 14, further comprising measuring a thickness of the electrode plate roll-pressed by the upper roller and lower roller and controlling an electrode plate thickness.
